# EUROPÄISCHE PATENTSCHRIFT

(11) **EP 2 282 399 B1**
(45) Veröffentlichungstag und Bekanntmachung des Hinweises auf die Patenterteilung: **08.02.2012**
(21) Anmeldenummer: 10169211.9
(22) Anmeldetag: 12.07.2010
(51) Int. Cl.: H02M 5/297, H02J 3/18, H02M 7/49, H02M 1/36

(54) **Statischer Umformer und Verfahren zum Anfahren des Umformers**
Static converter and method for starting the converter
Convertisseur statique et procédé de démarrage du convertisseur

(30) Priorität: 15.07.2009 DE 102009033515
(43) Veröffentlichungstag der Anmeldung: 09.02.2011
(73) Patentinhaber: SIEMENS AKTIENGESELLSCHAFT, 80333 München (DE)
(72) Erfinder: Gruber, Rainer, 91560, Heilsbronn (DE); Halfmann, Ulrich, 91094, Bräuningshof (DE); Lehmpfuhl, Jörg, 91058, Erlangen (DE); Rettensteiner, Erich, 90411, Nürnberg (DE)

(56) Entgegenhaltungen:
- US-A1- 2007 109 823
- US-A1- 2010 213 921
- RUFER A ET AL: "Control of a Hybrid Asymmetric Multilevel Inverter for Competitive Medium-Voltage Industrial Drives", IEEE TRANSACTIONS ON INDUSTRY APPLICATIONS, IEEE SERVICE CENTER, PISCATAWAY, NJ, US, Bd. 41, Nr. 2, 1. März 2005 (2005-03-01), Seiten 655-664, XP011129530, ISSN: 0093-9994, DOI: DOI:10.1109/TIA.2005.844382
- SHUAI LU ET AL: "High Power Motor Drives Based On Hybrid Multilevel Converters and Direct Torque Control", APPLIED POWER ELECTRONICS CONFERENCE, APEC 2007 - TWENTY SECOND ANNUAL IEEE, IEEE, PI, 1. Februar 2007 (2007-02-01), Seiten 1077-1083, XP031085344, ISBN: 978-1-4244-0713-2

## Beschreibung

Die Erfindung bezieht sich auf einen statischen Umformer gemäß Oberbegriff des Patentanspruchs 1 und auf ein Verfahren zum Anfahren des Umformers nach Patentanspruch 8.

Derartige statische Umformer werden vorzugsweise für Netzanwendungen im hohen Leistungsbereich von typischerweise größter 10 MVA eingesetzt.

Ein Einsatzgebiet sind Hochspannungs-Gleichstrom-Übertragungsanlagen, wobei elektrische Energie mit Gleichstrom hoher Spannung von über 100 kV über große Leitungslängen übertragen wird, an deren Enden sich Stromrichterstationen mit statischen Umformern der eingangs genannten Art befinden.

Ein weiters Einsatzgebiet sind statische Blindleistungskompensationsanlagen, in welchen statische Umformer der eingangs genannten Art die Spannungsqualität und Stabilität in Übertragungsnetzen verbessern, den Netzanschluss von fluktuierend einspeisenden Energiequellen ermöglichen sowie in Industrieanlagen Blindleistungen und Flicker kompensieren.

Ein anderes Einsatzgebiet derartiger Umformer sind Unterwerke zur Traktionsversorgung von Schienenfahrzeugen, welche die Schnittstellen zwischen einem öffentlichen Hochspannungsnetz, nachfolgend Landesnetz bezeichnet, und dem Hochspannungsnetz zur Bahnstromversorgung, nachfolgend Bahnnetz genannt, bilden. Während die Bahnnetze einphasig ausgebildet sind und eine Frequenz von 16,7 Hz oder 25 Hz aufweisen, sind die speisenden Landesnetze dreiphasig ausgebildet und weisen eine Frequenz von 50 Hz oder 60 Hz auf. Zur Kopplung dieser beiden unterschiedlichen Netze werden die Umformer der eingangs genannten Art als statische Frequenzumrichter eingesetzt.

Ein statischer Umformer der eingangs genannten Art weist eine Mehrzahl an Modulzweigen auf, welche - je nach Stromrichtertyp - in B6-Brückenschaltung oder auch in Dreieckschaltung verschaltet sein können. Dabei sind in jedem Modulzweig mehrere Submodule elektrisch in Reihe geschaltet. Die Spannung pro Submodul beträgt typisch circa 1 bis 3 kV, die Spannung eines Modulzweiges kann - je nach Anwendung - im Bereich von etwa 10 kV bis zu einigen 100 kV liegen. Jedes Submodul ist als Halb- oder Vollbrückenschaltung ausgeführt und weist einen zugeordneten Kondensator als Energiespeicher sowie Leistungshalbleiter als Schaltelemente auf. Die Leistungshalbleiter können die Spannung des Kondensators mit einer oder zwei Polaritäten sowie Null an ihre Leistungsklemmen schalten. Ein Regelsystem steuert die Submodule derart an, dass sich durch die Reihenschaltung der Spannungen an den Leistungsklemmen der zweipoligen Submodule die momentan gewünschte Gesamtspannung eines Modulzweigs einstellt. Die zwischen zwei Modulzweigen eines Phasenmoduls abgegriffene Spannung kann nahezu beliebig eingestellt werden, um so die nahezu sinusförmige Spannung aufzubauen. Derartige statische Umformer werden als modulare Multilevel-Stromrichter bezeichnet. Ein einphasiger Stromrichter mit zwei Phasenmodulen und ein dreiphasiger Stromrichter mit drei Phasenmodulen sind beispielsweise aus "A New Single Phase AC/AC-Multilevel Converter For Traction Vehicles Operating On AC Line Voltage", veröffentlicht von M. Glinka, R. Marquardt, auf der EPE-Konferenz 2003 in Toulouse bekannt. In analoger Weise können andere mehrphasige Stromrichter verwirklicht werden.

Neben den exzellenten elektrischen Eigenschaften zeichnen sich derartige Umformer durch ihren modularen Aufbau aus. Sie können sehr vielseitig und kosteneffizient eingesetzt werden und weisen eine hohe Redundanz und Verfügbarkeit auf. Anlagen in den eingangs aufgeführten Einsatzgebieten können durch Verwendung derartiger Umformer sehr platzsparend ausgebildet werden.

In "New Concept for High Voltage - Modular Multilevel Converter", veröffentlicht von R. Marquardt, A. Lesnicar auf der PESC-Konferenz 2004 in Aachen, Deutschland, ist ein Verfahren zur Inbetriebnahme eines derartigen Umformers angedeutet, mittels dessen die Kondensatoren von einem spannungsfreien Zustand auf Betriebsspannung aufgeladen werden sollen. Zur Aufladung der Kondensatoren eines Phasenmoduls ist eine Hilfsspannungsquelle mit einer nur relativ geringen Ausgangsspannung erforderlich. Die Leistungshalbleiter einer bestimmten Anzahl von Submodulen in einem Modulzweig werden dabei derart geschaltet, dass die Kondensatoren dieser Submodule im Strompfad sind und demzufolge geladen werden, während die Kondensatoren der anderen Submodule so geschaltet werden, dass diese nicht im Strompfad sind. Wenn ein Kondensator des Modulzweigs seine Betriebsspannung erreicht hat, werden durch entsprechendes Schalten die weiteren ausgewählt. Auf diese Weise werden alle Kondensatoren in den Modulzweigen nacheinander auf Betriebsspannung aufgeladen.

Eine Besonderheit der Submodule kann sein, dass die Hilfsspannungsversorgung der Leistungshalbleiter aus der Kondensatorspannung erfolgt, die deshalb erst ab einer bestimmten Mindestspannung aktiv werden können. Bei Inbetriebnahme des Umformers ist es daher erforderlich, die Kondensatoren der Submodule auf die Mindestspannung aufzuladen, damit der Umformer mit dem speisenden Netz oder mit einer Last verbunden werden kann. Dieser Vorgang wird als Vorladung bezeichnet. Das oben beschriebene Verfahren ist hier nicht anwendbar, da die Submodule ohne Hilfsspannung nicht ansteuerbar sind.

Eine Möglichkeit der Vorladung ist, den Umformer direkt mit dem speisenden Netz zu verbinden, so wie in "Control of a Hybrid Asymmetric Multilevel Inventer for Competitive Medium-Voltage Industrial Drives" veröffentlicht von M Veenstra, 2005. Nachteilig dabei ist, dass es beim Einschalten des Transformators zwischen Netz und Stromrichter bei ungünstiger Phasenlage der Netzspannung zu einem stark erhöhten Einschaltstrom kommen kann, weil der Einsenkern in die Sättigung getrieben wird. Durch die damit verbundene Verringerung des induktiven Blindwiderstandes fließen kurzzeitig sehr hohe Ströme, die als Inrushströme bezeichnet werden. Diese Inrushströme überlagern sich mit den Vorladeströmen, was zu einer unerwünscht hohen Belastung des Netzes führen kann. Geschaltete Vorladewiderstände können dieses Problem zwar mildern, allerdings kann bei einigen Stromrichter-Konfigurationen die erforderliche Mindestspannung der Kondensatoren nicht erreicht werden.

Der Erfindung liegt daher die Aufgabe zugrunde, einen gattungsgemäßen Umformer und ein Verfahren zum Anfahren des Umformers bereitzustellen, womit ein ausreichend hohes Spannungsniveau für die Kondensatoren der Submodule erreicht wird, um einerseits die Mindestspannung für die Spannungsversorgung der Submodulelektronik und andererseits die Minimalspannung für eine Synchronisation mit den Netzen zu erreichen.

Der auf den Umformer bezogene Teil der Aufgabe wird gelöst durch einen statischen Umformer der eingangs genannten Art mit den Merkmalen des kennzeichnenden Teils des Patentanspruchs 1. Demnach ist eine Einrichtung zur Vorladung der Kondensatoren vorgesehen, welche leistungselektronische Mittel zur Bereitstellung eines einstellbaren Vorladestromes, insbesondere eines begrenzten und konstanten Vorladestromes, aufweist. Die leistungselektronischen Mittel können beispielsweise als Stromsteller, als selbstgeführter Umrichter oder als netz- oder selbstgeführter Gleichrichter ausgebildet sein. Die leistungselektronischen Mittel können von einem Hilfsspannungsnetz, beispielsweise einem Eigenbedarfsnetz mit Niederspannung, versorgt werden. Die leistungselektronischen Mittel sind mit der Stromrichterbrücke über einen Vorladetransformator verbunden, der die Niederspannung auf ein für die Vorladung geeignetes Spannungsniveau anhebt. Die erfindungsgemäße Vorladeeinrichtung umgeht eine direkte Vorladung der Kondensatoren aus dem Leistungskreis oder aus dem Hilfsspannungsnetz und vermeidet die damit einhergehenden hohen Spitzenströme, die negative Auswirkungen auf das speisende Netz, insbesondere Spannungseinbrüche, haben können. Im Gegensatz zu Vorladewiderständen können die leistungselektronischen Mittel den Vorladestrom nicht nur begrenzen sondern auf einem konstanten Wert halten. Dadurch werden relativ kurze Vorladezeiten erreicht.

In einer bevorzugten Ausgestaltung des erfindungsgemäßen Umformers sind die leistungselektronischen Mittel als ein in Phasenanschnittsteuerung betriebener Stromsteller ausgeführt. Stromsteller sind an sich bekannt und weisen zwei gegenläufig parallel geschaltete Thyristoren oder Triacs auf. Durch den Phasenanschnitt kann die Vorladespannung gesteuert und somit der Vorladestrom auf einen definierten Wert begrenzt werden. Da die Leistung für die Vorladung üblichen Niederspannungslasten entspricht, können mit Vorteil handelsübliche Stromsteller verwendet werden.

In einer vorteilhaften Ausführungsform des erfindungsgemäßen Umformers sind bei einem als Drehstromnetz oder Wechselstromnetz ausgebildeten Hilfsspannungsnetz die leistungselektronischen Mittel als ein Drehstromsteller bzw. Wechselstromsteller ausgeführt. Durch Wahl des geeigneten Stromstellers kann eine erfindungsgemäße Vorladeeinrichtung an das zur Verfügung stehende Eigenbedarfnetz angepasst werden.

In einer bevorzugten Ausführungsform des erfindungsgemäßen Umformers ist die Stromrichterschaltung als B6-Brückenschaltung ausgebildet und über Leistungstransformatoren und Schalteinrichtungen einerseits mit einem dreiphasigen Drehstromnetz und andererseits mit einem einphasigen Wechselstromnetz verknüpft. Diese Ausführungsform ist insbesondere für die Kopplung eines dreiphasigen Landesnetzes mit einem einphasigen Bahnnetz von Bedeutung. Da die Kondensatoren der Submodule aus dem Eigenbedarfnetz vorgeladen werden, können die Leistungstransformatoren von der Seite der Stromrichterbrücke nach Schließen der Schalteinrichtung zwischen Leistungstransformator und Stromrichterbrücke inrushfrei aufmagnetisiert werden. Anschließend kann die Spannung der Stromrichterschaltung mit der Netzspannung synchronisiert. der Netz-Leistungsschalter geschlossen und die Stromrichterschaltung so mit den Netzen stoßfrei verbunden werden.

In einer alternativen bevorzugten Ausführungsform des erfindungsgemäßen Umformers ist die Stromrichterschaltung als Dreickschaltung ausgebildet und über Leistungstransformatoren und Schalteinrichtungen mit einem dreiphasigen Drehstromnetz verknüpft. Diese Ausführung ist mit Vorteil für Anwendungen zur Blindleistungskompensation (engl. Static Var Compensation) einsetzbar.

Vorzugsweise ist die Vorladeeinrichtung des erfindungsgemäßen Umformers bei Ausbildung des Hilfsspannungsnetzes als Drehstromnetz oder als Wechselstromnetz an die Stromrichterbrücke drehstromseitig bzw. wechselstromseitig angeschlossen. Mit Vorteil kann die erfindungsgemäße Vorladeeinrichtung mit der Stromrichterschaltung von der Seite des Landesnetzes oder von der Seite des Bahnnetzes verbunden werden. Im Falle der Hochspannungs-Gleichstrom-Übertragung wäre es die Gleichstromseite.

In einer vorteilhaften Ausgestaltung des erfindungsgemäßen Umformer ist der Vorladetransformator als dritte Wicklung eines Leistungstransformators ausgebildet ist. Hierdurch lassen sich Platz und Kosten für einen eigenen Vorladetransformator einsparen.

Der auf das Verfahren zur Inbetriebnahme eines erfindungsgemäßen Umformers bezogene Teil der Aufgabe wird gelöst durch ein Verfahren zum Anfahren eines statischen Umformers mit den Schritten nach Patentanspruch 8. Die Kondensatoren der Submodule werden zunächst auf eine vorgegebene Mindestspannung, die zur Aktivierung der Leistungshalbleiter erforderlich ist, aufgeladen. Dabei wird die Ausgangsspannung des Stromstellers durch Phasenanschnitt-steuerung derart sukzessive erhöht, dass der Vorladestrom begrenzt und konstant gehalten wird, bis sich der Vorladestrom durch die Gegenspannung der Submodule verringert und die Kondensatoren auf die Mindestspannung geladen sind.

Vorzugsweise werden dann die Leistungshalbleiter derart angesteuert, dass die Kondensatoren der Submodule bis auf Betriebsspannung aufgeladen werden.

Weiter vorzugsweise wird bei der Regelung des Vorladestroms durch die leistungselektronischen Mittel der aktuelle Spannungsverlauf des versorgenden Hilfsspannungsnetzes berücksichtigt. Durch die Einbeziehung der momentanen Spannung des Hilfsspannungsnetzes in die Regelung wird eine weitere Minimierung der Vorladezeit bei wechselnder Kapazität oder Vorbelastung des Hilfsspannungsnetzes möglich.

Desweiteren werden vorzugsweise die Leistungstransformatoren anschließend aufmagnetisiert und mit den Netzspannungen synchronisiert.

Schließlich wird vorzugsweise nach Erreichen der Mindestspannung die Stromrichterschaltung mit einem verknüpften Netz verbunden.

Weitere Eigenschaften und Vorteile der Erfindung ergeben sich aus nachfolgender Beschreibung anhand der Zeichnungen, in deren
- FIG 1: ein erstes Ausführungsbeispiel,
- FIG 2: ein zweites Ausführungsbeispiel,
- FIG 3: ein drittes Ausführungsbeispiel,
- FIG 4: ein viertes Ausführungsbeispiel,
- FIG 5: ein fünftes Ausführungsbeispiel,
- FIG 6: ein sechstes Ausführungsbeispiel,
- FIG 7: ein als Halbbrücke ausgeführtes Submodul,
- FIG 8: ein als Vollbrücke ausgeführtes Submodul,
- FIG 9: ein Drehstromsteller,
- FIG 10: ein Wechselstromsteller,
- FIG 11: eine Stromrichterschaltung in B6-Brückenanordnung,
- FIG 12: eine Stromrichterschaltung in Drieckschaltung
eines erfindungsgemäßen Umformers durch als Einlinienschemata ausgeführte Prinzipschaltbilder veranschaulicht sind.

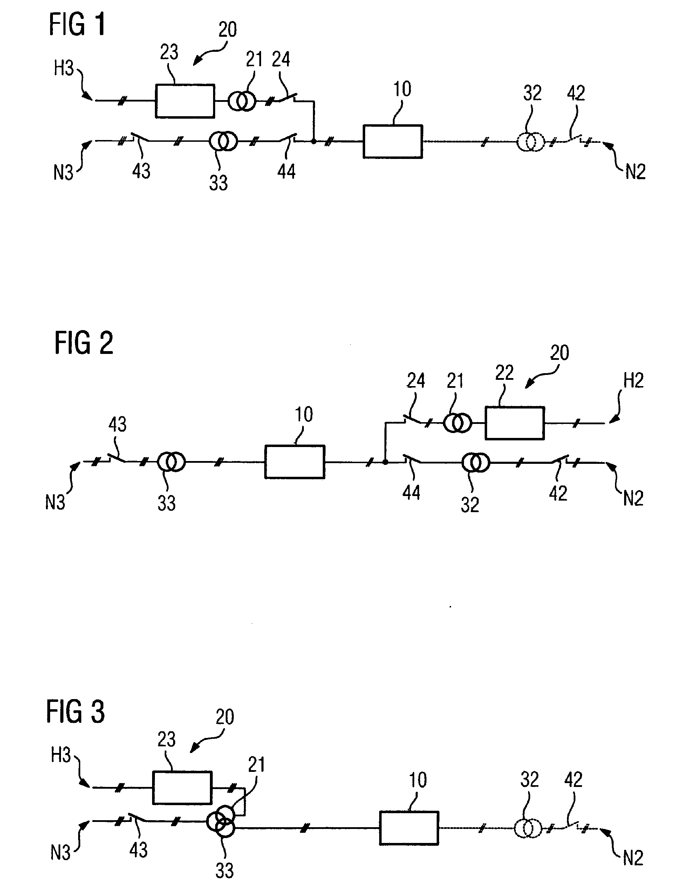

Die Ausführungsbeispiele gemäß FIG 1 bis FIG 6 beziehen sich auf die Anwendung eines erfindungsgemäßen statischen Umformers für die Kupplung eines Bahnnetzes an ein Landesnetz. Das speisende Landesnetz als dreiphasiges Drehstromnetz N3 liefert eine Netzspannung 110 kV mit einer Netzfrequenz von 50 Hz, während das aufnehmende Bahnnetz ein einphasiges Wechselstromnetz N2 mit einer Netzspannung von 15 kV oder 110 kV und einer Netzfrequenz von 16,7 Hz ist.

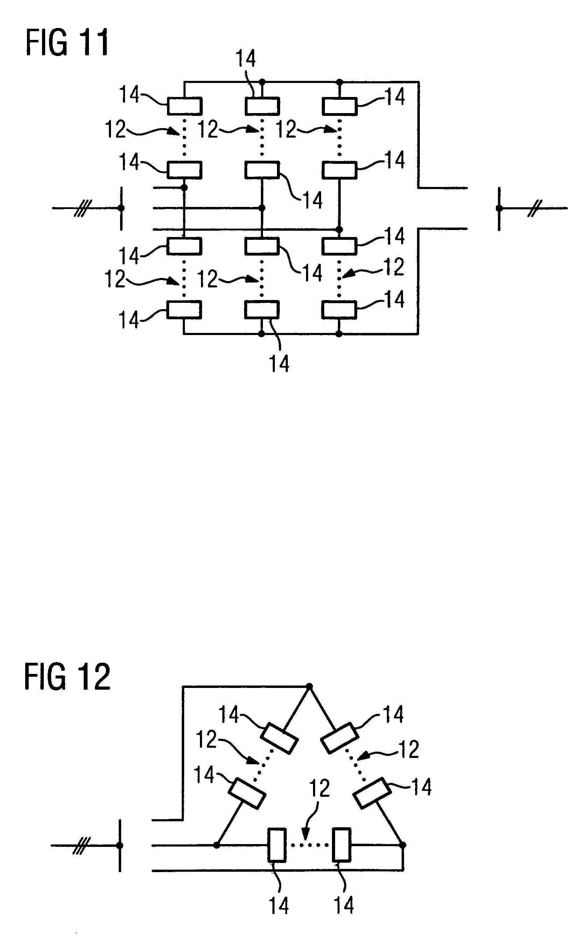

Gemäß FIG 11 weist die Stromrichterschaltung 10 weist drei Paare von Modulzweigen 12 auf, die in B6-Brückenschaltung angeordnet sind. Alternativ weist die Stromrichterschaltung 10 nach FIG 12 drei in Dreieckschaltung angeordnete Modulzweige 12 auf.

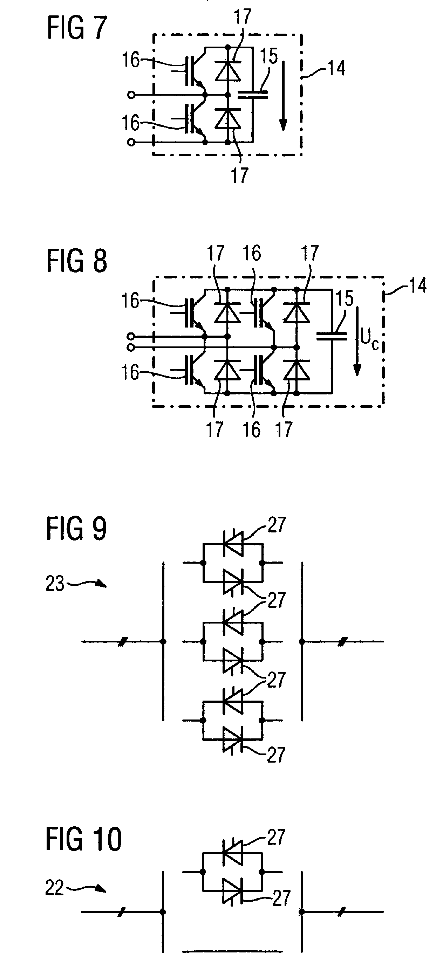

Jeder Modulzweig 12 weist elektrisch in Reihe geschaltete Submodule 14 auf, die als zweipolige schaltbare Spannungsquellen wirken. Hierzu weist ein Submodul 14 einen Kondensator 15 als Energiespeicher und Leistungshalbleiter 16 sowie Dioden 17 gemäß FIG 7 in Halbbrückenschaltung oder gemäß FIG 8 in Vollbrückenschaltung auf. Die Spannung pro Submodul 14 beträgt typischerweise etwa 1 kV bis 3 kV, während die Spannung pro Modulzweig 12 je nach Anwendung im Bereich von etwa 10 kV bis zu einigen 100 kV liegt.

Die Stromrichterschaltung 10 ist mit dem speisenden Drehstromnetz N3 mittels eines Leistungstransformators 33 und mit dem aufnehmenden Bahnnetz N2 mittels eines Leistungstransformators 32 verknüpft, deren Nennleistungen im Bereich von etwa 10 MVA bis 100 MVA liegen. Sekundärseitig des wechselstromseitigen Leistungstransformators 32 ist eine Schalteinrichtung 42 vorgesehen, während primärseitig des drehstromseitigen Leistungstransformators 33 eine Schalteinrichtung 43 vorgesehen ist. Eine weitere Schalteinrichtung 44 ist zwischen dem drehstromseitigen Leistungstransformator 33 und der Stromrichterbrücke 10 angeordnet.

In den Ausführungsbeispielen gemäß FIG 1 und FIG 3 ist die Wechselstromseite gestrichelt dargestellt, da neben der Bahnnetzkupplung auch andere Anwendungen denkbar sind; so könnte beispielsweise eine Hochspannungs-Gleichstrom-Übertragungsanlage eine weitere zur Stromrichterschaltung 10 gespiegelte Stromrichterschaltung aufweisen. Für diese Anwendung kommt auch die Stromrichterschaltung 10 in B6-Brückenstruktur nach FIG 11 zum Einsatz. Für die Blindleistungskompensation entfällt der in den FIG 1 und FIG 3 dargestellte Teil und die Stromrichterschaltung 10 ist vorzugsweise als Dreieckschaltung nach FIG 12 ausgeführt.

Da im Betrieb des erfindungsgemäßen Umformers die Steuerungselektronik 16 der Submodule 14 durch deren Kondensatoren 15 versorgt werden, müssen diese beim Anfahren bzw. Starten des Umformers zunächst auf eine vorgebbare Mindestspannung vorgeladen werden, die zur Aktivierung der Steuerungselektronik 16 ausreicht. Hierzu ist erfindungsgemäß eine Einrichtung 20 zur Vorladung vorgesehen, die leistungselektronische Mittel zur Bereitstellung eines begrenzten und konstanten Vorladestromes aufweist. Die leistungselektronischen Mittel werden durch ein Hilfsspannungsnetz versorgt, welches als Wechselstromnetz H2 oder Drehstromnetz H3 ausgebildet sein kann. Das Hilfsspannungsnetz könnte beispielsweise durch eine Eigenbedarfsanlage eines Bahn-Unterwerks gebildet werden, die die leistungselektronischen Mittel mit Niederspannung von 400 V versorgt. Um die Ausgangsspannung der leistungselektronischen Mittel auf ein für die Vorladung der Kondensatoren 15 geeignetes Niveau anzuheben, weist die Vorladeeinrichtung 20 einen Vorladetransformator 21 auf, der über eine Schalteinrichtung 24 mit der Stromrichterschaltung 10 verbunden ist.

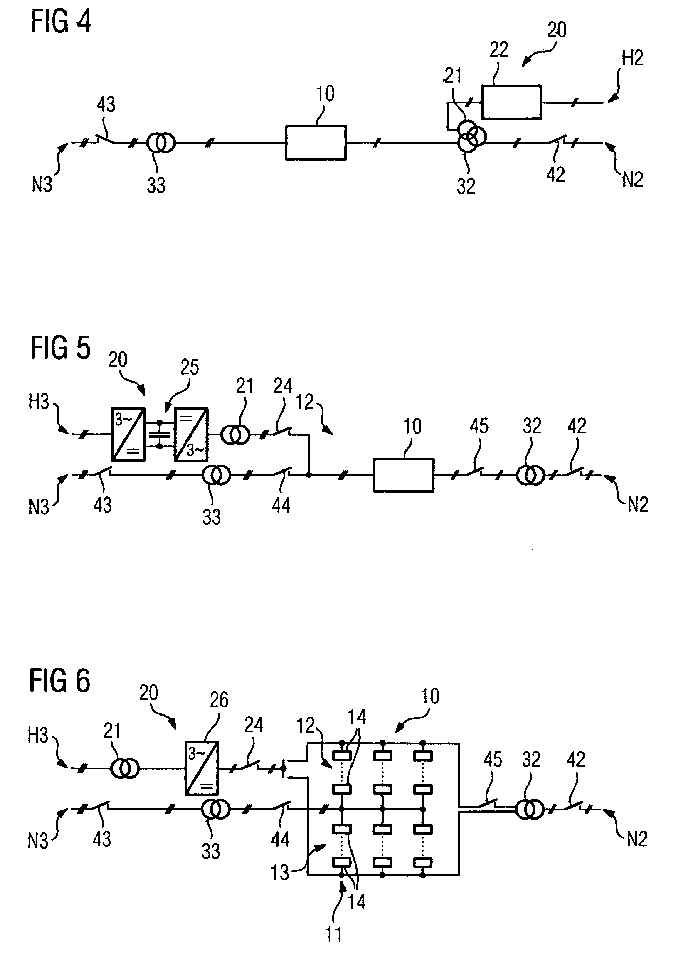

In den Ausführungsbeispielen gemäß FIG 1 und FIG 3 wird die Vorladeeinrichtung 20 durch ein Drehstrom-Hilfsspannungsnetz H3 versorgt, wobei die leistungselektronischen Mittel als Drehstromsteller 23 ausgebildet sind. Hingegen sind die leistungselektronischen Mittel in den Ausführungsbeispielen gemäß FIG 2 und FIG 4 als Wechselstromsteller 22 ausgebildet, der durch ein Wechselstrom-Hilfsspannungsnetz H2 versorgt wird. Ein Drehstromsteller bzw. Wechselstromsteller weist gemäß FIG 9 bzw. FIG 10 jeweils zwei antiparallel geschaltete Thyristoren 27 oder Triacs auf, die mit Phasenanschnitt zur Erzeugung eines konstanten Vorladestroms angesteuert werden. Die Vorladeeinrichtung 20 mit Drehstromsteller 23 ist gemäß FIG 1 und FIG 3 auf der Drehstromseite der Stromrichterschaltung 10 angeschlossen. Die Vorladeeinrichtung 20 mit Wechselstromsteller 22 ist gemäß FIG 2 und FIG 4 auf der Wechselstromseite der Stromrichterbrücke 10 angeschlossen. Bei Anschluss an die Bahnseite kann die Vorladeeinrichtung 20 beispielsweise aus dem einphasigen Bahnnetz gespeist werden.

In den Ausführungsbeispielen gemäß FIG 1 und FIG 2 sind die Vorladetransformatoren 21 als eigenständige Bauteile ausgeführt, während sie in den in FIG 3 und FIG 4 dargestellten Ausführungsbeispielen als dritte Wicklung des entsprechenden Leistungstransformators 33 bzw. 32 ausgebildet sind. Letztere Ausführung hat prinzipiell den Nachteil, dass die Magnetisierung des Leistungstransformators 33 bzw. 32 aus dem Niederspannungs-Eigenbedarfsnetz H3 bzw. H2 aufgebracht werden muss und dass der betreffende Transformator 33 bzw. 32 entsprechend dimensioniert werden muss.

In den FIG 5 und FIG 6 sind zwei weitere Ausführungsbeispiele gezeigt, deren Vorladeeinrichtungen 20 aus dem Niederspannungs-Eigenbedarfsnetz H3 versorgt werden. Nach FIG 5 sind als leistungselektronische Mittel ein selbstgeführter Umrichter 25 vorgesehen, der allerdings aufwändiger als ein Drehstromsteller ist. Nach FIG 6 können die leistungselektronischen Mittel auch als ein netz- oder selbstgeführter Gleichrichter 26 zwischen Vorladetransformator 21 und Stromrichterschaltung 10 ausgebildet sein. Hier muss der Gleichrichter 26 für die hohe Vorladespannung konzipiert sein. Die Submodule 14 werden durch die im Laufe der Vorladung sukzessive zu erhöhende Gleichspannung geladen. Auch hier ist der Aufwand sehr hoch.

Insgesamt wird erfindungsgemäß mit bekannten leistungselektronischen Mitteln, insbesondere mit Stromstellern 23 bzw. 22, und mittels eines bekannten Steuerungsverfahrens mit Phasenanschnitt eine Vorladung von Submodulkondensatoren 15 in einer passiven Phase erreicht, wobei der Vorladestrom begrenzt und im Wesentlichen konstant gehalten werden kann. Es wird eine Vorladung aus dem Niederspannungsnetz-Eigenbedarfsnetz ermöglicht, wobei Spannungseinbrüche in Grenzen gehalten werden. Da die Leistung für die Vorladung üblichen Niederspannungslasten entspricht, kann ein handelsüblicher Niederspannungs-Drehstromsteller verwendet werden. Die Leistungstransformatoren können von der Seite der Stromrichterschaltung 10 aus nach Schließen des Schalters 44 inrushfrei aufmagnetisiert werden. Anschließend kann die Stromrichterschaltung 10 mit dem Netz N3 synchronisiert und stoßfrei durch Schließen des Netzleistungsschalters 43 verbunden werden. Es werden relativ kurze Vorladezeiten erreicht, die noch zusätzlich durch Einbeziehung der aktuellen Spannung des Hilfsspannungsnetzes H3 in die Regelung minimiert werden können.

## Patentansprüche

1. Statischer Umformer mit einer Stromrichterschaltung (10), die eine Mehrzahl an verschalteten Modulzweigen (12) aufweist, wobei jeder Modulzweig (12) ein oder mehrere elektrisch in Reihe geschaltete zweipolige Submodule (14) als schaltbare Spannungsquellen aufweist, welche jeweils einen Kondensator (15) als Energiespeicher und Leistungshalbleiter (16) als elektronische Schaltelemente umfassen,
**gekennzeichnet durch**
eine Einrichtung (20) zur Vorladung der Kondensatoren (15), welche leistungselektronische Mittel zur Bereitstellung eines einstellbaren Vorladestromes aufweist, die von einem Hilfsspannungsnetz (H2 bzw. H3) versorgt werden und über einen Vorladetransformator (21) mit der Stromrichterbrücke (10) verbunden sind.

2. Statischer Umformer nach Anspruch 1,
wobei die leistungselektronischen Mittel als ein in Phasenanschnittsteuerung betriebener Stromsteller ausgeführt sind.

3. Statischer Umformer nach Anspruch 2,
wobei bei einem als Drehstromnetz (H3) oder Wechselstromnetz (H2) ausgebildeten Hilfsspannungsnetz die leistungselektronischen Mittel als ein Drehstromsteller (23) bzw. Wechselstromsteller (22) ausgeführt sind.

4. Statischer Umformer nach einem der Ansprüche 1 bis 3,
wobei die Stromrichterschaltung (10) als B6-Brückenschaltung ausgebildet ist und über Leistungstransformatoren (32, 33) und Schalteinrichtungen (42, 43) einerseits mit einem dreiphasigen Drehstromnetz (N3) und andererseits mit einem einphasigen Wechselstromnetz (N2) verknüpft ist.

5. Statischer Umformer nach einem der Ansprüche 1 bis 3,
wobei die Stromrichterschaltung (10) als Dreieckschaltung ausgebildet ist und über Leistungstransformatoren (32, 33) und Schalteinrichtungen (42, 43) mit einem dreiphasigen Drehstromnetz (N3) verknüpft ist.

6. Statischer Umformer nach Anspruch 4 oder 5,
wobei die Vorladeeinrichtung (20) bei Ausbildung des Hilfsspannungsnetzes als Drehstromnetz (H3) oder als Wechselstromnetz (H2) an die Stromrichterschaltung (10) drehstromseitig bzw. wechselstromseitig angeschlossen ist.

7. Statischer Umformer nach einem der Ansprüche 4 bis 6,
wobei der Vorladetransformator (21) als dritte Wicklung eines Leistungstransformators (32, 33) ausgebildet ist.

8. Verfahren zum Anfahren eines statischen Umformers nach einem der Ansprüche 1 bis 7,
wobei die Kondensatoren (15) der Submodule (14) auf eine vorgegebene Mindestspannung, die zur Aktivierung der Ansteuerung der Leistungshalbleiter (16) erforderlich ist, aufgeladen werden, indem die Ausgangsspannung des Stromstellers (22, 23) durch Phasenanschnittsteuerung derart sukzessive erhöht wird, dass der Vorladestrom begrenzt und konstant gehalten wird, bis sich der Vorladestrom durch die Gegenspannung der Submodule (14) verringert und die Kondensatoren (15) auf die Mindestspannung geladen sind.

9. Verfahren nach Anspruch 8,
wobei dann die Leistungshalbleiter (16) derart angesteuert werden, dass die Kondensatoren (15) der Submodule (14) bis auf Betriebsspannung aufgeladen werden.

10. Verfahren nach Anspruch 8 oder 9,
wobei bei der Regelung des Vorladestroms durch die leistungselektronischen Mittel der aktuelle Spannungsverlauf des versorgenden Hilfsspannungsnetzes berücksichtigt wird.

11. Verfahren nach einem der Ansprüche 8 bis 10,
wobei die Leistungstransformatoren (32, 33) anschließend aufmagnetisiert und mit den Netzspannungen synchronisiert werden.

12. Verfahren nach einem der Ansprüche 8 bis 11,
wobei nach Erreichen der Mindestspannung die Stromrichterschaltung (10) mit einem verknüpften Netz (N3 bzw. N2) verbunden wird.

## Claims

1. Static converter having a power converter circuit (10) which has a plurality of interconnected module branches (12), wherein each module branch (12) has one or more electrically series-connected two-pole submodules (14) as switchable voltage sources which each comprise a capacitor (15) as energy store and power semiconductors (16) as electronic switching elements, **characterized by**
a device (20) for precharging the capacitors (15) which has power electronics means for providing an adjustable precharge current, said power electronics means being supplied with power by an auxiliary supply system (H2 or H3) and being connected to the converter bridge (10) via a precharge transformer (21).

2. Static converter according to Claim 1,
wherein the power electronics means are in the form of a power controller operated using phase gating control.

3. Static converter according to Claim 2,
wherein for an auxiliary supply system in the form of a three-phase system (H3) or AC system (H2) the power electronics means are in the form of a three-phase AC power controller (23) or AC power controller (22).

4. Static converter according to one of Claims 1 to 3,
therein the power converter circuit (10) is in the form of a B6 bridge circuit and is linked by means of power transformers (32, 33) and switching devices (42, 43) firstly to a three-phase system (N3) and secondly to a single-phase AC system (N2).

5. Static converter according to one of Claims 1 to 3,
therein the power converter circuit (10) is in the form of a delta circuit and is linked by means of power transformers (32, 33) and switching devices (42, 43) to a three-phase system (N3).

6. Static converter according to Claim 4 or 5,
wherein the precharge device (20) is connected to the power converter circuit (10) on the three-phase side or on the AC side when the auxiliary supply system is in the form of a three-phase system (H3) or in the form of an AC system (H2).

7. Static converter according to one of Claims 4 to 6,
therein the precharge transformer (21) is in the form of a third wingding in a power transformer (32, 33).

8. Method for starting up a static converter according to one of Claims 1 to 7,
wherein the capacitors (15) of the submodules (14) are charged to a prescribed minimum voltage, which is required for activating the actuation of the power semiconductors (16), by virtue of the output voltage of the power controller (22, 23) being gradually increased by means of phase gating control such that the precharge current is limited and kept constant until the precharge current is reduced by the back-e.m.f. of the submodules (14) and the capacitors (15) have been charged to the minimum voltage.

9. Method according to Claim 8,
wherein the power semiconductors (16) are then actuated such that the capacitors (15) of the submodules (14) are charged to operating voltage.

10. Method according to Claim 8 or 9,
wherein the present voltage profile of the supplying auxiliary supply system is taken into account for the regulation of the precharge current by the power electronics means.

11. Method according to one of Claims 8 to 10,
wherein the power transformers (32, 33) are subsequently magnetized and synchronized to the system voltages.

12. Method according to one of Claims 8 to 11,
wherein the power converter circuit (10) is connected to a linked system (N3 or N2) when the minimum voltage has been reached.

## Revendications

1. Convertisseur statique ayant un circuit ( 10 ) de convertisseur de courant, qui comporte une pluralité de branches ( 12 ) de module câblées, chaque branche ( 12 ) de module ayant, comme source de tension pouvant être branchée, un ou plusieurs sous-modules ( 14 ) bipolaires montés électriquement en série et comprenant respectivement un condensateur ( 15 ) comme source d'énergie et un semiconducteur ( 16 ) de puissance comme élément de commutation électronique,
**caractérisé par**
un dispositif ( 20 ) pour précharger les condensateurs ( 15 ), lequel a des moyens d'électronique de puissance, pour mettre à disposition un courant de précharge réglable, qui sont alimentés par un réseau ( H2 ou H3 ) de tension auxiliaire et sont reliés au pont ( 10 ) du convertisseur de courant par un transformateur ( 21 ) de précharge.

2. Convertisseur statique suivant la revendication 1,
dans lequel les moyens électroniques de puissance sont réalisés sous la forme d'un gradateur de courant fonctionnant par commande à retard de phase.

3. Convertisseur statique suivant la revendication 2,
dans lequel, pour un réseau de tension auxiliaire constitué sous la forme d'un réseau ( H3 ) triphasé ou d'un réseau ( H2 ) de courant alternatif, les moyens électroniques de puissance sont réalisés sous la forme d'un gradateur ( 23 ) de courant triphasé ou d'un gradateur ( 22 ) de courant alternatif.

4. Convertisseur statique suivant l'une des revendications 1 à 3,
dans lequel le circuit ( 10 ) de convertisseur de courant est constitué sous la forme d'un circuit en pont B6 et est relié par des transformateurs ( 32, 33 ) de puissance et des dispositifs ( 42, 43 ) de commutation, d'une part, à un réseau ( N3 ) de courant triphasé et, d'autre part, à un réseau ( N2 ) de courant alternatif monophasé.

5. Convertisseur statique suivant l'une des revendications 1 à 3,
dans lequel le circuit ( 10 ) de convertisseur de courant est constitué sous la forme d'un circuit en étoile et est relié, par des transformateurs ( 32, 33 ) de puissance et des dispositifs ( 42, 43 ) de commutation, à un réseau ( N3 ) de courant triphasé.

6. Convertisseur statique suivant la revendication 4 ou 5,
dans lequel le dispositif ( 20 ) de précharge est, si le réseau de tension auxiliaire est constitué en réseau ( H3 ) de courant triphasé ou en réseau ( H2 ) de courant alternatif, relié au dispositif ( 10 ) de convertisseur de courant du côté du courant triphasé ou du côté alternatif.

7. Convertisseur statique suivant l'une des revendications 4 à 6,
dans lequel le transformateur ( 21 ) de précharge est réalisé sous la forme d'un troisième enroulement d'un transformateur ( 32, 33 ) de puissance.

8. Procédé pour faire démarrer un convertisseur statique suivant l'une des revendications 1 à 7,
dans lequel on charge les condensateurs ( 15 ) des sous-modules ( 14 ) à une tension minimum prescrite, qui est nécessaire pour l'activation de la commande des semiconducteurs ( 16 ) de puissance en augmentant successivement la tension de sortie du gradateur ( 22, 23 ) de courant par commande par retard de phase, de manière à limiter le courant de précharge et à le maintenir constant jusqu'à ce que le courant de précharge soit diminué par la contre-tension des sous-modules ( 14 ) et que les condensateurs ( 15 ) soient chargés à la tension minimum.

9. Procédé suivant la revendication 8,
dans lequel on commande ensuite les semiconducteurs ( 16 ) de puissance, de manière à charger les condensateurs ( 15 ) des sous-modules ( 14 ) jusqu'à une tension de fonctionnement.

10. Procédé suivant la revendication 8 ou 9,
dans lequel, lors de la régulation du courant de précharge par les moyens électroniques de puissance, on tient compte de la courbe présente de tension du réseau de tension auxiliaire d'alimentation.

11. Procédé suivant l'une des revendications 8 à 10,
dans lequel on magnétise ensuite complètement les transformateurs ( 32, 33 ) de puissance et on les synchronise avec les tensions du réseau.

12. Procédé suivant l'une des revendications 8 à 11,
dans lequel, après avoir atteint la tension minimum, on relie le circuit ( 10 ) de convertisseur à un réseau ( N3 ou N2 ) de liaison.
